# EUROPÄISCHE PATENTSCHRIFT

(11) **EP 2 980 311 B1**
(45) Veröffentlichungstag und Bekanntmachung des Hinweises auf die Patenterteilung: **05.10.2016**
(21) Anmeldenummer: 15175695.4
(22) Anmeldetag: 07.07.2015
(51) Int. Cl.: D21F 5/02, H05B 3/00, H05B 3/58, F16C 13/00

(54) **BEHEIZBARE WALZE**
HEATABLE ROLLER
ROULEAU CHAUFFABLE

(30) Priorität: 01.08.2014 DE 202014103596 U
(43) Veröffentlichungstag der Anmeldung: 03.02.2016
(73) Patentinhaber: Robert Bürkle GmbH, 72250 Freudenstadt (DE)
(72) Erfinder: Stortz, Markus, 72250 Freudenstadt (DE); Scheerer, Marcel, 72250 Freudenstadt (DE); Plocher, Michael, 72285 Pfalzgrafenweiler (DE)
(74) Vertreter: Lemcke, Brommer & Partner Patentanwälte Partnerschaft mbB

(56) Entgegenhaltungen:
- DE-A1- 3 033 689
- DE-A1-102008 019 720
- DE-C1- 3 400 087

## Beschreibung

Die Erfindung betrifft eine beheizbare Walze nach dem Oberbegriff des Anspruchs 1. Eine solche beheizbare Walze umfasst ein kreiszylindrisches Mantelrohr aus wärmeleitendem Metall, das stirnseitig mit Deckeln verschlossen ist, eine oder mehrere elektrische Heizmatten, die im Inneren des Mantelrohrs angeordnet sind und die gesamte Innenfläche des Mantelrohrs abdecken, einen Anschlusszapfen, der an einem Deckel angeordnet ist, sich entlang der Walzenachse vom Mantelrohr weg erstreckt und eine axiale Durchführung für Anschlusskabel zur Versorgung der Heizmatten mit elektrischem Strom aufweist, sowie einen Schleifringkörper, der am Anschlusszapfen befestigt ist und zur elektrischen Kontaktierung der Anschlusskabel dient.

Beheizte Walzen der vorliegenden Art werden in unterschiedlichen Vorrichtungen eingesetzt, beispielsweise in Walzentrocknern zur Trocknung von Papierbahnen und dergleichen sowie bei Kopiergeräten. Das bevorzugte Anwendungsgebiet der vorliegenden Erfindung, auf das die Erfindung allerdings nicht eingeschränkt ist, ist das Auftragen von Schmelzklebern auf plattenförmige Werkstücke, wie zum Beispiel Aluminiumplatten oder Holzwerkstoffplatten, die mit einem Holzfurnier, einer Folie oder sonstigen bahnförmigen Materialien beschichtet werden sollen.

Herkömmlich werden beheizte Walzen mit Thermoöl beheizt, das durch das Innere der Walze fließt oder mit dem das Innere der Walze aufgefüllt ist und das durch in etwa mittig innerhalb der Walze angeordnete elektrische Heizpatronen erwärmt wird. Das Verwenden von Thermoöl ist jedoch nicht optimal, da dann an der Walze ein Volumenänderungsanschluss mit entsprechender Verrohrung angebracht werden muss. Außerdem muss die Walze aufwändig gegen auslaufendes Öl geschützt werden.

Um die Verwendung von Thermoöl zu vermeiden, werden mitunter Heizpatronen im Inneren der Walze verwendet, ohne diese mit Öl zu füllen. Dies führt allerdings zu einer sehr ungleichmäßigen Wärmeverteilung auf der Außenfläche des Mantelrohrs. Weitere bekannte Alternativen sind die Verwendung von Infrarotstrahlern, die innerhalb oder außerhalb der Walze angeordnet sind und das Mantelrohr erwärmen. Abgesehen vom hohen konstruktiven Aufwand sind auch diese Alternativen mit Problemen behaftet, wie beispielsweise einem schlechten Wirkungsgrad und der Gefahr einer lokalen Überhitzung bei Störungen im Betrieb, beispielsweise bei einem Stillstand der Vorrichtung, in der die beheizte Walze zum Einsatz kommt.

Aus der DE 34 00 087 C1 ist eine beheizbare Walze bekannt geworden, die ein von innen beheizbares Mantelrohr aufweist. Eine Anzahl von ringförmigen Heizelementen, die jeweils separat kontaktiert und geregelt werden, wird dort in regelmäßigen Abständen auf einem Trägerrohr angeordnet und dieses in das zu beheizende Mantelrohr eingebracht. Die Heizelemente, die als elektrische Widerstandsheizelemente ausgebildet sind, werden jeweils durch einen Spannring an die Innenfläche des Mantelrohrs angedrückt.

Die DE 10 2008 019 720 A1 offenbart eine beheizbare Walze, die ein Mantelrohr mit mindestens einer auf dessen Innenseite wendelförmig verlaufenden Nut aufweist. In diese Nut wird mindestens ein strangförmiges elektrisches Heizelement eingelegt.

In der DE 30 33 689 A1 ist vorgeschlagen worden, eine beheizbare Walze mit einem koaxial innerhalb des Mantelrohrs aus wärmeleitendem Metall angeordneten Innenrohr auszustatten und in den zwischen dem Mantelrohr und dem Innenrohr gebildeten Ringraum elektrische Heizmatten einzulegen, die das Mantelrohr von innen auf die gewünschte Temperatur erwärmen. Als elektrische Heizmatten sind nach diesem Stand der Technik Silikonmatten mit darin eingegossenen Heizdrähten vorgesehen, wobei für eine möglichst homogene Temperaturverteilung über den gesamten Umfang des Mantelrohrs vorgeschlagen wird, mehrere stumpf aneinanderstoßende Heizmatten über den Umfang des Ringraums zu verteilen.

Im bevorzugten Anwendungsgebiet der vorliegenden Erfindung ist es von größter Wichtigkeit, dass die Außenfläche des Mantelrohrs sehr gleichmäßig temperiert ist:
Eine Vorrichtung zum Auftragen von Schmelzkleber enthält in der Regel eine Auftragswalze zum Auftragen des Schmelzklebers auf die damit zu versehende Werkstückoberfläche sowie eine Dosierwalze, die zusammen mit der Auftragswalze einen Dosierspalt bildet, in den entweder bereits aufgeschmolzener und somit heiß zugeführter Schmelzkleber eingebracht wird, oder in dem der in fester Form eingebrachte Schmelzkleber vor Ort aufgeschmolzen wird. In beiden Fällen muss die Dosierwalze beheizt sein, um den Schmelzkleber aufschmelzen und/oder auf einer Temperatur halten zu können, die ihn für den Auftrag flüssig bzw. in einem bestimmen Viskositätsbereich hält.

Handelsübliche Schmelzkleber ändern ihre dynamische Viskosität bei Temperaturänderungen stark; typische Werte sind hierbei eine Viskositätsänderung um bis zu 10.000 mPas bei einer Temperaturänderung um etwa 10°C. Wenn sich die Viskosität beispielsweise entlang der Längserstreckung der Auftragswalze ändert, wird im Dosierspalt die Auftragswalze und/oder Dosierwalze ungleichmäßig verformt, so dass der Schmelzkleber im Dosierspalt mit ungleichmäßiger Verteilung auf die Auftragswalze dosiert wird. Dies führt zu einem ungleichmäßigen Auftragsbild auf dem Werkstück, was unter Qualitätsaspekten nicht optimal ist.

Der vorliegenden Erfindung liegt daher die Aufgabe zugrunde, eine beheizbare Walze der eingangs genannten Art hinsichtlich ihrer gleichmäßigen Erwärmung über den gesamten Umfang des Mantelrohrs hinweg zu verbessern.

Gelöst ist diese Aufgabe durch eine beheizbare Walze mit den Merkmalen des Anspruchs 1. Vorteilhafte Ausgestaltungen und Weiterbildungen der erfindungsgemäßen beheizbaren Walze sind in den Ansprüchen 2 bis 9 niedergelegt.

Erfindungsgemäß ist also erkannt worden, dass bei der aus dem Stand der Technik nach der DE 30 33 689 A1 bekannten beheizbaren Walze der Wärmeübergang von den elektrischen Heizmatten in das Mantelrohr nicht optimal gleichmäßig erfolgt, da die Heizmatten nicht definiert am Mantelrohr anliegen, sondern in manchen Bereichen mehr und in anderen Bereichen weniger Kontakt zum Mantelrohr haben. Durch die erfindungsgemäße Maßnahme, im Inneren des Mantelrohrs eine Spanneinrichtung anzuordnen, die das aus dem Stand der Technik bekannte Innenrohr ersetzt und die Heizmatten permanent gegen die Innenfläche des Mantelrohrs drückt bzw. vorspannt, ist zuverlässig gewährleistet, dass die elektrischen Heizmatten an der gesamten Innenfläche des Mantelrohrs anliegen und so einen sehr gleichmäßigen definierten Wärmefluss in das Mantelrohr sicherstellen.

Durch die vorliegende Erfindung werden also auch Walzen, die mit innenliegenden elektrischen Heizmatten beheizt werden, für Schmelzkleberauftragsvorrichtungen verwendbar. Aber auch auf anderen Anwendungsgebieten ergeben sich Vorteile durch die erfindungsgemäß erzielte, sehr gleichförmige Temperaturverteilung im Mantelrohr einer beheizbaren Walze mit innenliegenden elektrischen Heizmatten.

In den Heizmatten der erfindungsgemäßen beheizbaren Walze können Temperatursensoren angeordnet sein, die einerseits zur Regelung der Temperatur in den Heizmatten dienen sowie andererseits als Alarmgeber verwendet werden können, um eine Überhitzung der elektrischen Heizmatten auszuschließen. Anstatt die Temperatursensoren in die Heizmatten zu integrieren, können sie auch im Bereich der Heizmatten angeordnet werden, beispielsweise zwischen der Spanneinrichtung und den Heizmatten bzw. in entsprechenden Ausnehmungen der Spanneinrichtung, vorzugsweise an die Heizmatten angrenzend.

Insofern Temperatursensoren vorhanden sind, sind diese vorzugsweise mit Signalleitungen versehen, die zusammen mit den Anschlusskabeln für die Versorgung der Heizmatten mit elektrischen Strom durch den Anschlusszapfen hinduch in den Schleifringkörper geführt sind. Dort kann die Signalleitung dann mit einer weiterführenden Signalleitung einer Temperaturregelung kontaktiert werden und den Kontakt auch bei Rotation der Walze beibehalten.

Die Deckel der erfindungsgemäßen beheizbaren Walze, die das Mantelrohr stirnseitig verschließen, sind vorzugsweise mit dem Mantelrohr verschraubt, beispielsweise mittels eines im Mantelrohr vorgesehenen Innengewindes oder mittels umfangsverteilt angeordneten Schrauben, die den Deckel durchgreifen und in die Stirnseite des Mantelrohrs eingreifen. Der Anschlusszapfen sowie ein diesem gegenüberliegender Zapfen zur Lagerung der beheizbaren Walze sind dann vorzugsweise fest mit den Deckeln verbunden, beispielsweise durch Verschweißen oder mittels Pressverbund.

Wie an sich bekannt, bestehen die elektrischen Heizmatten auch im Rahmen der vorliegenden Erfindung vorzugsweise aus Silikon mit eingebetteten elektrischen Widerstandsheizelementen.

Die erfindungsgemäß vorhandene Spanneinrichtung kann im Wesentlichen aus mindestens zwei Andruckschalen bestehen, die über Stellglieder miteinander verbunden sind und mittels der Stellglieder auseinanderbewegt oder aufeinander zu bewegt werden können. Diese Andruckschalen entsprechen im Querschnitt Kreisbogenstücken und weisen somit die Form von Zylindermantelsegmenten auf. Dies gewährleistet, dass die Heizmatten ganzflächig gegen die Innenfläche des Mantelrohrs gedrückt werden und stellt so einen sehr gleichmäßigen Wärmeübergang von den Heizmatten in das Mantelrohr sicher. Die Verwendung von zwei Andruckschalen, die in der Summe eine nahezu vollständige Zylindermantelfläche bilden, ist hierbei der am einfachsten zu beherrschende Fall, da es dann genügt, ein oder zwei Stellglieder zu verwenden, die diese beiden Andruckschalen auseinanderbewegen oder aufeinander zu bewegen. Wenn mehrere umfangsverteilte Andruckschalen vorhanden sind, wird die benötigte Mechanik zur Spreizung dieser Andruckschalen entsprechend aufwändiger.

Die Stellglieder zum Erzeugen des erfindungsgemäßen Drucks auf die Heizmatten mittels der Andruckschalen können im einfachsten Fall als Schraubenelemente ausgestattet sein, die die Relativbewegung zwischen den einzelnen Andruckschalen erzeugen. Die Stellelemente können alternativ auch als Federbolzen ausgestaltet sein, so dass sie selbständig für eine Spreizung der Andruckschalen und somit für das erfindungsgemäße Andrücken der Heizmatten an das Mantelrohr sorgen.

Ein Ausführungsbeispiel für eine erfindungsgemäß ausgestaltete beheizbare Walze ist in den beiliegenden Zeichnungen dargestellt und wird im Folgenden näher erläutert. Es zeigen:
- Figur 1: eine seitliche Schnittdarstellung einer erfindungsgemäß ausgestalteten beheizbaren Walze;
- Figur 2: eine Schnittdarstellung entlang der Linie A - A aus Figur 1, in einer ersten Ausführung;
- Figur 3: eine Schnittdarstellung wie Figur 2, jedoch in einer zweiten Ausführung.

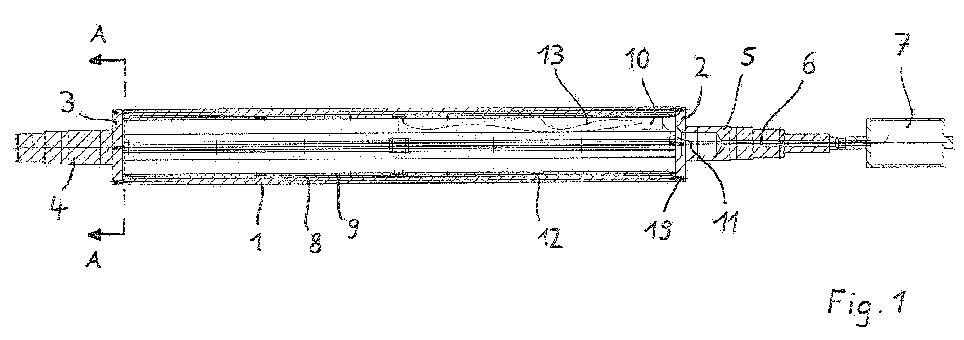

Die in Figur 1 im Schnitt dargestellte beheizbare Walze besteht aus einem Mantelrohr 1, das stirnseitig mit einem ersten Deckel 2 und einem zweiten Deckel 3 verschlossen ist. Am zweiten Deckel 3 ist ein Zapfen 4 zur Lagerung der Walze angeschweißt. Demselben Zweck dient ein Anschlusszapfen 5, der am ersten Deckel 2 angeschweißt ist. Der Zapfen 4 und der Anschlusszapfen 5 erstrecken sich wie üblich entlang der Längsachse der Walze bzw. des Mantelrohrs 1, so dass dieses bestimmungsgemäß rotieren kann.

Der Anschlusszapfen 5 ist mit einer axialen Durchführung 6 versehen, die in einen Schleifringkörper 7 mündet, welcher am Ende des Anschlusszapfens 5 sitzt und mit diesem mitrotiert.

Im Inneren des Mantelrohrs 1, das vorliegend aus Stahl besteht, befinden sich elektrische Heizmatten 8, die die gesamte Innenfläche des Mantelrohrs 1 abdecken. Eine Spanneinrichtung mit Andruckschalen 9 sorgt dafür, dass die Heizmatten 8 permanent und flächig gegen das Mantelrohr 1 gedrückt werden, so dass ein zuverlässiger und gleichmäßiger Wärmeübergang von den Heizmatten 8 in das Mantelrohr 1 gewährleistet ist.

Die elektrischen Heizmatten 8 sind über eine Stromversorgungsbox 10 und Anschlusskabel 11 an eine Stromquelle angeschlossen. Hierzu sind die Anschlusskabel 11 der Stromversorgungsbox 10 durch die Durchführung 6 im Anschlusszapfen 5 hindurch bis in den Schleifringkörper 7 geführt, wo in bekannter Art und Weise die (hier nicht dargestellte) Kontaktierung zwischen rotierenden Schleifringen und stehenden Kontaktstiften und somit der Anschluss an eine (ebenfalls nicht dargestellte) Stromquelle mit Walzensteuerung hergestellt wird.

Im Bereich der Heizmatten 8 sind in die Andruckschalen 9 eine Anzahl von Temperatursensoren 12 eingelassen, die die gemessene Temperatur über Signalleitungen 13 durch die Stromversorgungsbox 10 und die Durchführung 6 im Anschlusszapfen 5 - getrennt von den Anschlusskabeln 11 - sowie über den Schleifringkörper 7 mittels eines separaten Signalschleifrings an eine Temperaturregelung melden, so dass die Temperatur der Heizmatten 8 in engen Toleranzen geregelt werden kann. Daneben dient das Signal der Temperatursensoren 12 dazu, bei einer drohenden Überhitzung eine Notabschaltung der Stromversorgung der Heizmatten 8 auszulösen.

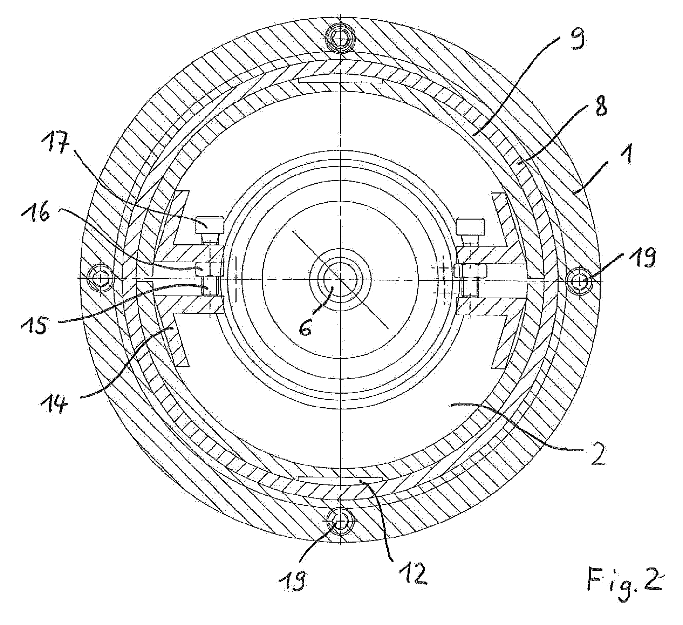

Die Spanneinrichtung ist in der Schnittdarstellung in Figur 2 besser zu erkennen. Innerhalb des Mantelrohrs 1 sind die hier ganzflächig am Mantelrohr 1 anliegenden Heizmatten 8 zu erkennen, die von zwei Andruckschalen 9 der Spanneinrichtung gegen die Innenfläche des Mantelrohrs 1 nahezu ganzflächig und permanent gedrückt werden. Die Andruckschalen 9 liegen hier in Form zweier Zylindermantelhälften, also etwa einen halben Kreisbogen beschreibenden Zylindermantelsegmenten vor, die zusammengenommen nahezu ein Innenrohr bilden. Über im Bereich der Stoßkanten der beiden Andruckschalen 9 innen angebrachte Winkel 14 können die beiden Andruckschalen 9 von Stellgliedern 15 gespreizt werden, die vorliegend als mit Kontermuttern 16 gesicherte Schraubenelemente 17 ausgestaltet sind.

Durch einfaches Aufschrauben oder Zuschrauben der Schraubenelemente 17 können somit die Andruckschalen 9 zueinander hin oder auseinander bewegt werden, wodurch der erfindungsgemäße permanente Druck auf die Heizmatten 8 bzw. der Druck der Heizmatten 8 gegen das Mantelrohr 1 erzeugt werden kann.

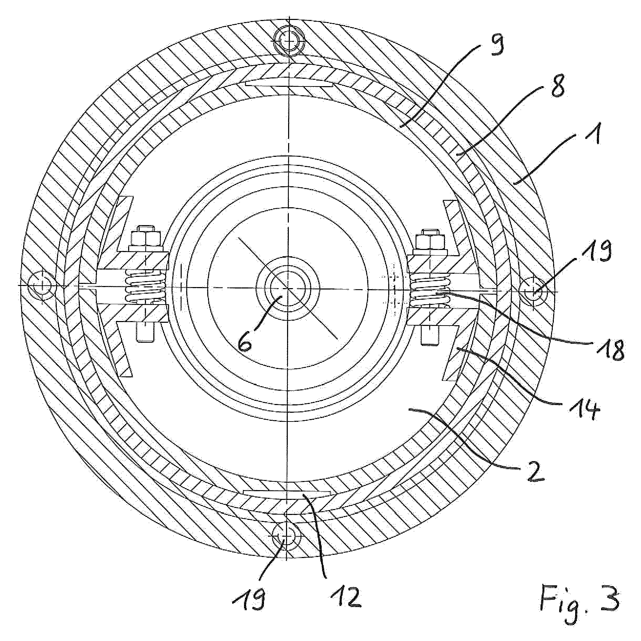

Figur 3 zeigt nahezu denselben Aufbau wie Figur 2, wobei jedoch eine Modifikation darin besteht, dass die Stellglieder 15 in Figur 3 als Federbolzen 18 ausgestaltet sind.

Die Figuren 2 und 3 verdeutlichen nebenbei, dass die Temperatursensoren 12 in Ausnehmungen der Andruckschalen 9 sitzen und somit die Heizmatten 8 vorgespannt kontaktieren. Dies führt zu einem zuverlässigen Wärmeübergang von den Heizmatten 8 in die Temperatursensoren 12 und dementsprechend zu einer sehr genauen Regelung der Temperatur in den Heizmatten 8.

Die Deckel 2, 3 des vorliegenden Ausführungsbeispiels sind, wie eine gemeinsame Betrachtung der Figuren 1 und 2 verdeutlicht, ganz einfach stumpf auf die Stirnseite des Mantelrohrs aufgesetzt und dort verschraubt, und zwar mit mindestens vier Schrauben 19, die den jeweiligen Deckel 2, 3 durchgreifen und stirnseitig in das Mantelrohr 1 eingreifen. Diese Ausgestaltung der einfach aufgesetzten Deckel 2, 3 ermöglicht nicht nur eine simple Konstruktion und eine unkomplizierte Montage und Demontage der Walze. Sie ermöglicht vielmehr auch zum Zusammenbau der Walze oder zum Austausch der Heizmatten sowie zu Wartungs- und Reparaturzwecken einen stirnseitigen Zugang zum Inneren des Mantelrohrs 1.

## Patentansprüche

1. Beheizbare Walze mit einem kreiszylindrischen Mantelrohr (1) aus wärmeleitendem Metall, das stirnseitig mit Deckeln (2, 3) verschlossen ist, mit einer oder mehreren elektrischen Heizmatten (8), die im Inneren des Mantelrohrs (1) angeordnet sind und die gesamte Innenfläche des Mantelrohrs (1) abdecken, mit mindestens einem Anschlusszapfen (5), der an einem Deckel (2) angeordnet ist und durch den Anschlusskabel (11) für die Versorgung der Heizmatten (8) mit elektrischem Strom geführt sind, sowie mit einem Schleifringkörper (7), der am Anschlusszapfen (5) befestigt ist und zur elektrischen Kontaktierung der Anschlusskabel (11) dient,
**dadurch gekennzeichnet,**
**dass** im Inneren des Mantelrohrs (1) eine Spanneinrichtung (9, 14, 15) angeordnet ist, die die Heizmatten (8) derart permanent gegen die Innenfläche des Mantelrohrs (1) drückt, dass die Heizmatten (8) an der gesamten Innenfläche des Mantelrohrs (1) anliegen.

2. Beheizbare Walze nach Anspruch 1,
**dadurch gekennzeichnet,**
**dass** in den Heizmatten (8) oder im Bereich der Heizmatten (8) Temperatursensoren (12) angeordnet sind.

3. Beheizbare Walze nach Anspruch 2,
**dadurch gekennzeichnet,**
**dass** die Temperatursensoren (12) mit Signalleitungen (13) versehen sind, die durch den Anschlusszapfen (5) hindurch in den Schleifringkörper (7) geführt sind.

4. Beheizbare Walze nach einem der Ansprüche 2 oder 3,
**dadurch gekennzeichnet,**
**dass** erste und zweite Temperatursensoren (12) vorgesehen sind, wobei die ersten Temperatursensoren (12) zur Erkennung einer drohenden Überhitzung dienen, während die zweiten Temperatursensoren (12) die Stellgröße für einen Regelkreis zur Regelung der Temperatur der Walze liefern.

5. Beheizbare Walze nach mindestens einem der Ansprüche 1 bis 4,
**dadurch gekennzeichnet,**
**dass** die Deckel (2, 3) mit dem Mantelrohr (1) verschraubt sind.

6. Beheizbare Walze nach Anspruch 5,
**dadurch gekennzeichnet,**
**dass** der Anschlusszapfen (5) fest mit dem Deckel (2) verbunden ist.

7. Beheizbare Walze nach mindestens einem der Ansprüche 1 bis 6,
**dadurch gekennzeichnet,**
**dass** die Heizmatten (8) im Wesentlichen aus Silikon mit eingebetteten elektrischen Widerstandsheizelementen bestehen.

8. Beheizbare Walze nach mindestens einem der Ansprüche 1 bis 7,
**dadurch gekennzeichnet,**
**dass** die Spanneinrichtung im Wesentlichen aus mindestens zwei Andruckschalen (9) in Form von Zylindermantelsegmenten besteht, die über Stellglieder (15) miteinander verbunden sind und mittels der Stellglieder (15) auseinanderbewegt oder aufeinander zu bewegt werden können.

9. Beheizbare Walze nach Anspruch 8,
**dadurch gekennzeichnet,**
**dass** die Stellglieder (15) als Schraubenelemente (17) oder als Federbolzen (18) ausgestaltet sind.

## Claims

1. Heatable roller having a circular-cylindrical tubular jacket (1) made of heat-conductive metal which is closed at its end faces with caps (2, 3), having one or more electrical heating mats (8) which are arranged in the interior of the tubular jacket (1) and cover the entire inner surface of the tubular jacket (1), having at least one connection journal (5) which is arranged on a cap (2) and through which connection cables (11) for supplying the heating mats (8) with electrical current are guided, and having a slip ring body (7) which is fixed to the connection journal (5) and serves for electrical contacting of the connection cables (11),
**characterised in that**
in the interior of the tubular jacket (1) there is arranged a clamping device (9, 14, 15) which presses the heating mats (8) permanently against the inner surface of the tubular jacket (1) in such a way that the heating mats (8) are in contact with the entire inner surface of the tubular jacket (1).

2. Heatable roller according to claim 1,
**characterised in that**
temperature sensors (12) are arranged in the heating mats (8) or in the region of the heating mats (8).

3. Heatable roller according to claim 2,
**characterised in that**
the temperature sensors (12) are provided with signal lines (13) which are guided through the connection journal (5) into the slip ring body (7).

4. Heatable roller according to either one of claims 2 and 3,
**characterised in that**
first and second temperature sensors (12) are provided, the first temperature sensors (12) serving to recognise a risk of overheating, while the second temperature sensors (12) supply the output variable for a control circuit for controlling the temperature of the roller.

5. Heatable roller according to at least one of claims 1 to 4,
**characterised in that**
the caps (2, 3) are screwed to the tubular jacket (1).

6. Heatable roller according to claim 5,
**characterised in that**
the connection journal (5) is fixedly joined to the cap (2).

7. Heatable roller according to at least one of claims 1 to 6,
**characterised in that**
the heating mats (8) consist substantially of silicone with embedded electrical resistance heating elements.

8. Heatable roller according to at least one of claims 1 to 7,
**characterised in that**
the clamping device consists essentially of at least two pressure shells (9) in the form of cylindrical jacket segments which are joined to one another by means of adjusting members (15) and, by means of the adjusting members (15), can be moved apart from one another or moved towards one another.

9. Heatable roller according to claim 8,
**characterised in that**
the adjusting members (15) are configured as screw elements (17) or as spring-loaded bolts (18).

## Revendications

1. Rouleau chauffable, avec un tube d'enveloppe (1) cylindrique circulaire en métal thermoconducteur, qui est fermé aux extrémités frontales par des couvercles (2, 3), avec une ou plusieurs nattes chauffantes électriques (8), qui sont disposées à l'intérieur du tube d'enveloppe (1) et couvrent toute la surface intérieure du tube d'enveloppe (1), avec au moins un embout de raccordement (5), qui est disposé sur un couvercle (2) et à travers lequel sont dirigés des câbles de raccordement (11) pour l'alimentation des nattes chauffantes (8) en courant électrique, et avec un ensemble de bagues collectrices (7), qui est fixé sur l'embout de raccordement (5) et sert à la mise en contact électrique des câbles de raccordement (11),
**caractérisé en ce qu'**un dispositif de serrage (9, 14, 15) est disposé à l'intérieur du tube d'enveloppe (1) et presse en permanence les nattes chauffantes (8) contre la surface intérieure du tube d'enveloppe (1) de telle sorte que les nattes chauffantes (8) s'appliquent sur toute la surface intérieure du tube d'enveloppe (1).

2. Rouleau chauffable selon la revendication 1, **caractérisé en ce que** des capteurs de température (12) sont disposés dans les nattes chauffantes (8) ou dans la région des nattes chauffantes (8).

3. Rouleau chauffable selon la revendication 2, **caractérisé en ce que** les capteurs de température (12) sont pourvus de lignes de signaux (13), qui sont amenées à passer à travers l'embout de raccordement (5) dans l'ensemble de bagues collectrices (7).

4. Rouleau chauffable selon la revendication 2 ou 3, **caractérisé en ce qu'**il est prévu des premiers et des deuxièmes capteurs de température (12), sachant que les premiers capteurs de température (12) servent à détecter une menace de surchauffe, tandis que les deuxièmes capteurs de température (12) fournissent la grandeur réglante pour un circuit de réglage destiné à réguler la température du rouleau.

5. Rouleau chauffable selon au moins une des revendications 1 à 4, **caractérisé en ce que** les couvercles (2, 3) sont assemblés par vissage au tube d'enveloppe (1).

6. Rouleau chauffable selon la revendication 5, **caractérisé en ce que** l'embout de raccordement (5) est fixement assemblé au couvercle (2).

7. Rouleau chauffable selon au moins une des revendications 1 à 6, **caractérisé en ce que** les nattes chauffantes (8) sont constituées pour l'essentiel de silicone avec des éléments à résistance chauffante incorporés.

8. Rouleau chauffable selon au moins une des revendications 1 à 7, **caractérisé en ce que** le dispositif de serrage est constitué pour l'essentiel d'au moins deux coques (9) de pression d'application sous la forme de segments d'enveloppe cylindrique, qui sont reliées entre elles par l'intermédiaire d'organes d'actionnement (15) et qui peuvent être éloignées ou rapprochées l'une de l'autre au moyen des organes d'actionnement (15).

9. Rouleau chauffable selon la revendication 8, **caractérisé en ce que** les organes d'actionnement (15) sont réalisés sous la forme d'éléments à vis (17) ou de boulons à ressort (18).
